# EUROPÄISCHE PATENTANMELDUNG

(11) **EP 3 340 349 A1**
(43) Veröffentlichungstag der Anmeldung: **27.06.2018**
(21) Anmeldenummer: 16205970.3
(22) Anmeldetag: 21.12.2016
(51) Int. Cl.: H01M 4/88, H01M 4/90, H01M 4/92, H01M 8/124

(54) **SCHWEFELTOLERANTER KATALYSATOR FÜR FESTOXID-BRENNSTOFFZELLE SOWIE HERSTELLUNGSVERFAHREN**

(71) Anmelder: sunfire GmbH, 01237 Dresden (DE)
(72) Erfinder: Strohbach, Thomas, 01309 Dresden (DE)
(74) Vertreter: Hansen, Jochen

(57) **Zusammenfassung**

Die Erfindung betrifft einen Schwefeltoleranter Hochtemperaturbrennstoffzellen[*Solid Oxide Fuel Cell - SOFC*]-Wassergas-Shift[WGS]-Katalysator, wobei dessen aktive Anode Nickel [*Ni*] und Gadolinium dotiertes Ceroxid [*GDC*] und einem Edelmetall, ausgewählt aus der Gruppe: Rhodium [*Rh*], Ruthenium [*Ru*], Platin [*Pt*], Osmium [Os], Iridium [*Ir*] oder Palladium [*Pd*] umfasst.

## Beschreibung

Die Erfindung betrifft einen Schwefeltoleranter Hochtemperaturbrennstoffzellen[*Solid Oxide Fuel Cell - SOFC*]-Wassergas-Shift[WGS]-Katalysator, wobei dessen aktive Anode Nickel [*Ni*] und Gadolinium dotiertes Ceroxid [*GDC*] und einem Edelmetall, ausgewählt aus der Gruppe: Rhodium [*Rh*], Ruthenium [*Ru*], Platin [*Pt*], Osmium [*Os*], Iridium [*Ir*] oder Palladium [*Pd*] umfasst.

Ferner betrifft die Erfindung ein dazugehöriges Herstellungsverfahren.

Aus dem **Stand der Technik** sind Festoxidbrennstoffzellen (SOFC) bekannt, wobei dies elektrochemische Energiewandler sind, die chemische Energieträger wie Wasserstoff oder Kohlendioxid, oder mit entsprechender Reformierung auch Kohlenwasserstoffe wie Methan, Propan oder Diesel in elektrische Energie umwandeln können.

SOFC-Anoden bestehen aus einer keramischen, beispielsweise Yttrium-stabilisiertes Zirkonoxid [YSZ] oder Gadolinium dotiertes Ceroxid [GDC] und einer metallischen Komponente, nämlich Nickel.

Die Aufgabe der Keramik besteht darin Sauerstoff-Ionen zur 3-Phasen-Grenze (3PG) zu transportieren. Die Funktion des Nickels besteht darin Elektronen zu leiten und die Wassergas-Shift-Reaktion (WGS), gemäß Gleichung GI.1, zu katalysieren.

Kohlenwasserstoffe enthalten, sofern sie aus fossilen bzw. biologischen Quellen stammen, einen geringen Anteil von Schwefelverbindungen, wie beispielsweise Schwefelwasserstoff (H₂S) oder Carbonylsulfid (COS). Die Anwesenheit von Schwefel reduziert die katalytische Aktivität des Nickels, welche zur internen Reformierung von Kohlenwasserstoffen über die Wassergas-Shift-Reaktion, gemäß GI.1, oder die Steam-Reforming-Reaktion, gemäß GI. 2, zur Bereitstellung eines wasserstoffreichen Brenngases benötigt wird, stark. GDC kompensiert einen Teil des Verlustes der katalytischen Aktivität des Nickels, jedoch erfolgen die Prozesse nicht verlustfrei.

Ohne entsprechende Entschwefelung wird die Leistungsfähigkeit der Brennstoffzelle verringert und in Abhängigkeit vom verwendeten Anodentyp und des verwendeten Brenngases die Funktion der SOFC sogar erheblich beeinträchtigt. Daher wird das Brenngas zur Verwendung in einer SOFC im Stand der Technik vorab durch eine Entschwefelung aufbereitet.

**CO + H₂O → CO₂ + H₂** (GI. 1)

**CH₄ + H₂O → 3H₂ + CO** (GI. 2)

Im Stand der Technik sind unterschiedliche Typen von entsprechenden Katalysatoren bekannt und vieles wurde im Stand der Technik bereits diskutiert.

Gleichwohl gibt es keine Lösung des Problems, nämlich die Schwefeltoleranz eines Hochtemperaturbrennstoffzellen[*Solid Oxide Fuel Cell - SOFC*]-Wassergas-Shift[WGS]-Katalysators kostengünstig und auf einfache Art und Weise zu erhöhen. Es sei darauf hingewiesen, dass es diesseitig nicht um die Erhöhung der Verkokungsresistenz geht.

Nachfolgend wird der relevante Stand der Technik gewürdigt:
In der Druckschrift AU 2009346342 B2 wird ein CO Shift Katalysator für den Einsatz in der Kohlevergasung beschrieben, wobei dieser Katalysator ein Edelmetall der Platingruppe als aktives Element umfasst und weiter ein Trägermaterial vorgesehen ist, das aus Titanium, Aluminium, Zirkonium und/oder Cerium besteht und die aktive Komponente unterstützt.

Die Druckschrift WO 2004/058399 A1 beschreibt einen Wasser-Gas-Shift-Katalysators, der Platin, Platinoxide oder Mischungen von diesen enthält, wobei der Katalysator dazu dient, Wassersstoff-reiches Synthesegas mittels des Wasser-Gas-Shift-Prozesses herzustellen.

Ferner ist aus der Druckschrift WO99/48805 A1 ein Wasser-Gas-Shift-Katalysator bekannt, dessen Trägerstruktur aus einer Mischung von Ceria und Zirkon besteht.

Die Druckschrift US 2012/0058036 A1 beschreibt einen CO-Shift-Katalysator, wobei dieser für die Kohlevergasung eingesetzt wird.

In der Druckschrift US 2010/0279194 A1 wird eine schwefeltolerante Anode für SOFCs beschrieben. Die Schwefeltoleranz wird durch Infiltration eines Katalysators in die Anode erreicht. Der Katalysator kann Praseodym oder Cobalt sein. Weiterhin besteht die Anode im Wesentlichen aus einem Ni/YSZ Cermet.

Die Druckschrift WO 2009/073882 A1 beschreibt die Erhöhung der Schwefeltoleranz durch Einsatz einer Schicht Ni-Co-SDC (Samarium dotiertes Ceroxid) sowie einer zweiten Schicht Ni-Co-ScSZ (Scandium dotiertes Zirkonoxid). Hierbei soll die Kinetik der Oxidation von Wasserstoff in einem schwefelhaltigen Brenngas erhöht werden.

Ferner wird in der Druckschrift US 8,057,951 B2 der Einsatz von keramischen Anoden, wie beispielsweise LST und LSV beschrieben, da diese Materialien in der Lage sind Schwefelwasserstoff zu oxidieren und damit unschädlich zu machen. Es wird daher ein zweistufiger Aufbau vorgeschlagen, wobei in einer ersten Stufe der Schwefelwasserstoff oxidiert wird und in einer zweiten Stufe das Brenngas.

Weiter wird in der Druckschrift US 2008/0138669 A1 der Einsatz von LST bzw. LSV vorgeschlagen, wobei die Schwefeltoleranz nicht zweistufig, sondern einstufig in einer Anode erhöht werden soll.

In der Druckschrift US 7,833,674 B2 werden Methoden beschrieben, die Anode einer SOFC mit Elementen zu infiltrieren, um deren Eigenschaften zu ändern. Es wird hier die Infiltration mit Edelmetallen bei einer einer Ni/YSZ Anode mit dem Ziel die Toleranz gegenüber einer Kohlenstoffabscheidung zu steigern beschrieben.

Die Druckschriften US 2005/0227133 A1 und US 8,715,886 B1 beschreiben die Imprägnierung einer Anode mit einer Metallsalzlösung, wobei das Metall Ni oder Cu bzw. Sn, Ga, In, Sb, Th, Pb, Bi, Ag, Au, Cu oder Po sein soll.

Ferner wird in der Druckschrift US 6,051,329 B1 die Verwendung von Edelmetallkatalysatoren Pt, Rh, Ru beschrieben, um ein vollständiges internes Reformieren von langkettigen Kohlenwasserstoffen bei niedrigen bis mittleren Temperaturen zu realisieren, wobei die Anode hierbei aus Ni/YSZ besteht.

Die Druckschrift DE 60 2004 009 993 T2 beschreibt die Beschichtung von Nickel mit einem Edelmetall, um ein Verkoken der Anode zu verhindern, wobei das verwendete Edelmetall Silber ist und die Beschichtung durch Imprägnierung, CVD oder PVD erfolgen kann.

Im Stand der Technik werden derzeit immer noch Entschwefelungseinheiten zur Entschwefelung von schwefelhaltigem Reformatgas und dgl. Eingesetzt. Die Entschwefelungseinheit besteht aus einer Kartusche, welche ein Adsorberbett, einem Volumenbereich in dem sich die Adsorbermaterialien, in der Regel Granulate auf Zn-Basis, enthält, durch das das Brenngas geleitet wird. Die Entschwefelungseinheit muss regelmäßig ausgetauscht werden, um die Funktion der SOFC sicher zu stellen. Derartige Entschwefelungseinheiten beanspruchen Bauraum und verursachen Kosten, einmalig und im Betrieb.

Es ist Aufgabe der Erfindung, wenigstens einen der nachfolgenden Aspekte umzusetzen:
- Herstellen und Fertigen eines Schwefeltoleranten Hochtemperaturbrennstoffzellen[Solid Oxide Fuel Cell - SOFC]-Wassergas-Shift[WGS]-Katalysator, der kostengüsntig und einfach zu produzieren ist;
- Verzicht auf eine Entschwefelungseinheit, wobei gleichzeitig schwefelhaltiges Refomatgas und dgl. Zugelassen wird;
- Erhöhung der Leistung und der Lebensdauer des Katalysators.

Gelöst werden die bzw. diese Probleme und Anforderungen durch die Merkmalskombinationen gemäß Hauptanspruch bzw. Nebenanspruch. Weitere Vorteile ergeben sich aus dem Unteranspruch.

Die aktive Anode des schwefeltoleranten Hochtemperaturbrennstoffzellen[Solid Oxide Fuel Cell - SOFC]-Wassergas-Shift[WGS]-Katalysators umfasst Nickel [Ni], Gadolinium dotiertes Ceroxid [GDC] und ein Edelmetall, ausgewählt aus der Gruppe: Rhodium [Rh], Ruthenium [Ru], Platin [Pt], Osmium [Os], Iridium [*Ir*] oder Palladium [Pd].

Insbesondere kann die aktive Anodenoberfläche auf und/oder in dessen keramischen Komponente [GDC] das Edelmetall [Rh, Ru, Pt, Os, Ir, Pd] in feinst verteilten Ablagerungen aufweisen.

Besonders vorteilhaft ist es, wenn die Teilchengrößenverteilung der keramischen Komponente [GDC] im Bereich von d(10) = 0,05..0,2 µm, d(50) = 0,15 .. 0,6 µm und d(90) = 0,5 .. 2 µm liegt. Die Teilchengröße der Edelmetallpartikel soll im gefertigten Zustand kleiner als ein Fünftel der Teilchengrößenverteilung der keramischen Komponente betragen. So wird sichergestellt, dass genügend Grenzflächen zwischen Edelmetallpartikeln und der keramischen Komponente vorhanden sind.

Das Herstellungsverfahren für den erfindungsgemäßen schwefeltoleranten Hochtemperaturbrennstoffzellen[Solid Oxide Fuel Cell - SOFC]-Wassergas-Shift[WGS]-Katalysator umfasst die Schritte:
- während des Herstellungsvorganges der aktiven Anode ein Infiltratieren der gesinterten Anode mit einer Metalllösung aus dem Edelmetall [Rh, Ru, Pt, Os, Ir, Pd] und anschließender Wärmebehandlung
   oder alternativ dazu, aber ergebnisäquivalent
- während des Herstellvorganges der aktiven Anode beim Herstellen der Anodenpaste / des Anodenpulvers ein Beimengen von Metallpartikeln aus dem Edelmetall [Rh, Ru, Pt, Os, Ir, Pd] in die Anodenpaste / das Anodenpulver und anschließend ein Sintern der Anode
   oder alternativ dazu, aber ergebnisäquivalent
- während des Herstellvorganges der aktiven Anode beim Herstellen des keramischen Anodenpulvers ein Beimengen einer Metalllösung aus dem Edelmetall [Rh, Ru, Pt, Os, Ir, Pd] und anschließender Wärmebehandlung (Dotierung)
   erfolgt.

Dieser kann in der Hochtemperaturbrennstoffzelle (SOFC) eingesetzt werden, um die Schwefeltoleranz mit einem kohlenwasserstoffhaltigem Brenngas zu erhöhen.

Erfinderseitig wurde erkannt, dass durch die Kombination von Nickel [*Ni*], Gadolinium dotiertes Ceroxid [*GDC*] und einem Edelmetall, ausgewählt aus der Gruppe Rhodium [*Rh*], Ruthenium [*Ru*], Platin [*Pt*], Osmium [*Os*], Iridium [*Ir*] oder Palladium *[Pd]* eine Leistungssteigerung des Hochtemperaturbrennstoffzellen[Solid Oxide Fuel Cell - SOFC]-Wassergas-Shift[WGS]-Katalysators realisiert wird, da der zulässige Funktionsbereich der SOFC Anode um den Betrieb mit schwefelhaltigem Reformatgas erweitert wird und die Entschwefelung wegfallen kann, wodurch Kosten eingespart werden. Die Schwefeltoleranz wird dadurch erreicht, dass das Metall, dessen Affinität im Vergleich zu Nickel mit Schwefel eine Verbindung einzugehen geringer ist, auf der keramischen Komponente der SOFC Anode, feinstverteilt aufgebracht wird, wobei die keramische Komponente GDC ist. Das zusätzlich eingebrachte Metall kann ein Edelmetall bzw. ein Metall der Platinmetalle, z.B. Ruthenium, Rhodium , Palladium, Osmium, Iridium oder Platin sein. Das zusätzliche Metall soll primär die Wassergas-shift-Reaktion unter Anwesenheit von Schwefel katalysieren, um die ausreichende Versorgung mit Wasserstoff während des Betriebs sicher zu stellen, GI. 1. Sekundär kann mit Hilfe des zusätzlichen Metalls höherwertige Kohlenwasserstoffe aufgespaltet werden, so dass auch diese als Brenngas zur Verfügung stehen, GI. 2. Das zusätzliche Metall übernimmt dabei einen Teil der Funktion des Nickels im schwefelfreien Betrieb.

Unter schwefelhaltigem Reformatgas übernimmt die Grenzfläche Metall / GDC die katalytische Funktion des Nickels und katalysiert damit die Wassergas-Shift-Reaktion. Die Funktion der Elektronenableitung wird weiterhin vom Nickel übernommen.

Das zusätzliche Metall wird entweder durch Infiltration der fertig gesinterten Anode / Zelle mit einer Metalllösung und anschließender Wärmebehandlung oder durch Beimengung von feinsten Metallpartikeln in die Anodenpulver und anschließender Sinterung der Elektroden oder durch Dotierung des Anodenpulvers mit einer Metalllösung und anschließender Wärmebehandlung eingebracht.

Es kann vollständig auf eine Entschwefelungseinheit verzichtet werden.

Durch mehrere Versuchsreihen konnte gezeigt werden, dass der CO Umsatz nach GI. 1 gegenüber der Direktoxidation bevorzugt abläuft. Ferner konnte bei Variation des Schwefelgehaltes des Reformatgases gezeigt werden, dass die Leistungsfähigkeit einer SOFC hauptsächlich durch das schwefelhaltige Reformatgas beeinträchtigt wird, da eine gehemmte Wasser-Gas-Shift-Reaktion abläuft.

Die Einfachheit der Erfindung ergibt sich durch die nachfolgenden Vorteile:
- es wird nur eine Trägerkomponente, nämlich nur Gadolinium dotiertes Ceroxid [GDC] als Trägerstruktur für das katalytisch aktive Element verwendet;
- als weitere Komponente wird zur elektrischen Leitung lediglich nur Nickel [Ni] verwendet;
- es kommt zur Anwendung nur eines Edelmetalls in der aktiven Anodenfläche zur Herstellung der Schwefeltoleranz in Kombination mit dem GDC;
- geringe Herstellungskosten durch einfache Materialien, keine definierten und aufwendig herzustellenden Materialmixe der Edelmetalle der Platingruppe;
- leichte Herstellung auf zweierlei Weise durch Vormischen der Anodenpaste oder durch Infiltrieren nach dem Sintern;
- diesseits wird die Wassergas-Shift-Reaktion katalysiert;
- der enthaltene Schwefelwasserstoff wird nicht oxidiert, da die Funktion der SOFC auch unter Anwesenheit von Schwefelwasserstoff sichergestellt ist;
- es müssen keine rein keramischen Anoden verwendet werden;
- nur das GDC muss beschichtet werden, nicht das Nickel, das weiterhin nur zur Leitung dient;
- durch die Einbringung eines Edelmetalls kann die Schwefelkartusche im Brennstoffzellensystem entfallen, wodurch Kosten durch den Tausch der Entschwefelungseinheit eingespart werden;
- weiterhin kann das Gesamtsystem, in das der Katalysator eingebunden ist, durch den Verzicht einer Entschwefelung kleiner und kostengünstiger ausfallen, wobei typischerweise jährlich zwischen 300 € und 1000 € pro Kilowatt erzeugter elektrischer Leistung eingespart werden können;
- zudem ist eine Reduzierung des Bauraums durch Verzicht auf die Entschwefelung je nach Systemgröße zwischen 2% und 10% möglich, wodurch das Gesamtsystem für den mobilen Einsatz bzw. für mobile Anwendungen besonders geeignet ist.

Nachfolgend wird ein Vergleich der Funktionsweise des SOFC-Katalysators unter schwefelfreiem Reformatgas, schwefelhaltigem Reformatgas und schwefelhaltigem Reformatgas mit modifizierter Anode anhand der beiliegenden Zeichnungen in der **Figurenbeschreibung** beschrieben, wobei diese die Erfindung erläutern sollen und nicht beschränkend zu werten sind:

Es zeigen:
- Fig. 1: die Funktionsweise der SOFC unter schwefelfreiem Reformatgas (Stand der Technik);
- Fig.2: die Funktionsweise der SOFC unter schwefelhaltigem Reformatgas (Stand der Technik);
- Fig.3: die Funktionsweise der SOFC unter schwefelhaltigem Reformatgas mit modifizierter Anode;
- Fig.4: den Vergleich des Spannungsverhaltens von verschiedenen SOFC-Zellen unter schwefelhaltigem Reformatgas und
- Fig.5: den Vergleich des Spannungsverhaltens unter schwefelhaltigem Brenngas bei verschiedenen Modellgasen.

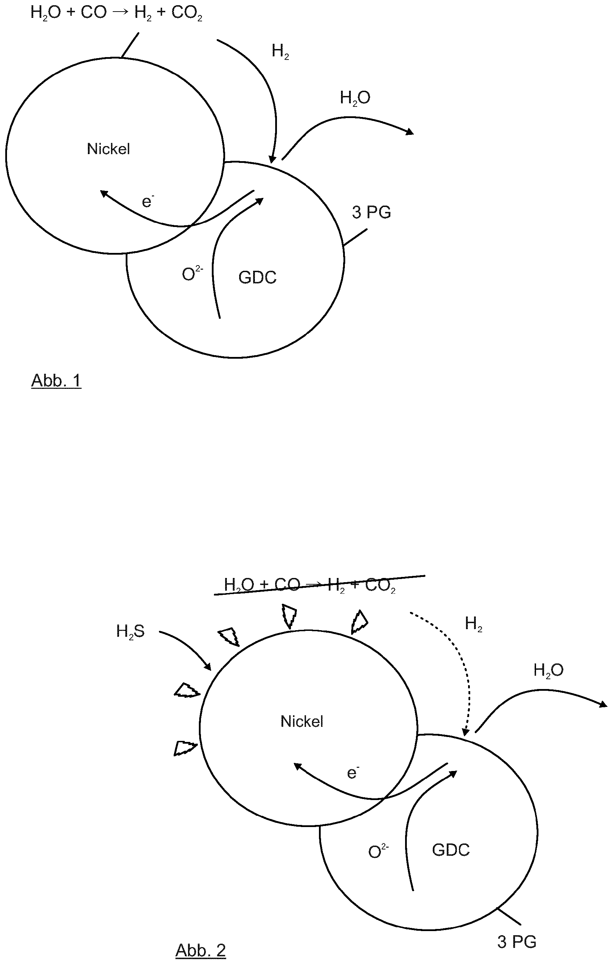

In **Fig. 1** ist die Funktionsweise der SOFC unter schwefelfreiem Reformatgas dargestellt. Die Wassergas-Shift-Reaktin läuft an der Nickeloberfläche ab. In diesem Ausführungsbeispiel ist eine reine Ni/GDC-Anode vorgesehen, wobei die 3-Phasen-Grenze an der Ni/GDC-Grenzfläche und an der GDC-Oberfläche ist. Die Wasser-Gas-Shift-Reaktion läuft größtenteils an der Ni-Oberfläche als auch an der GDC-Oberfläche ab.

**Fig.2** zeigt die Funktionsweise der SOFC unter schwefelhaltigem Reformatgas.

Unter der Bedingung der Ni/GDC-Anode mit H₂S läuft die Wasser-Gas-Shift-Reaktion gehemmt an der GDC Oberfläche ab, was zu einer verminderten Produktion von Wasserstoff und zu einem sichtbaren Leistungsabfall führt. Es findet kaum Wasser-Gas-Shift-Reaktion an der Ni-Oberfläche statt.

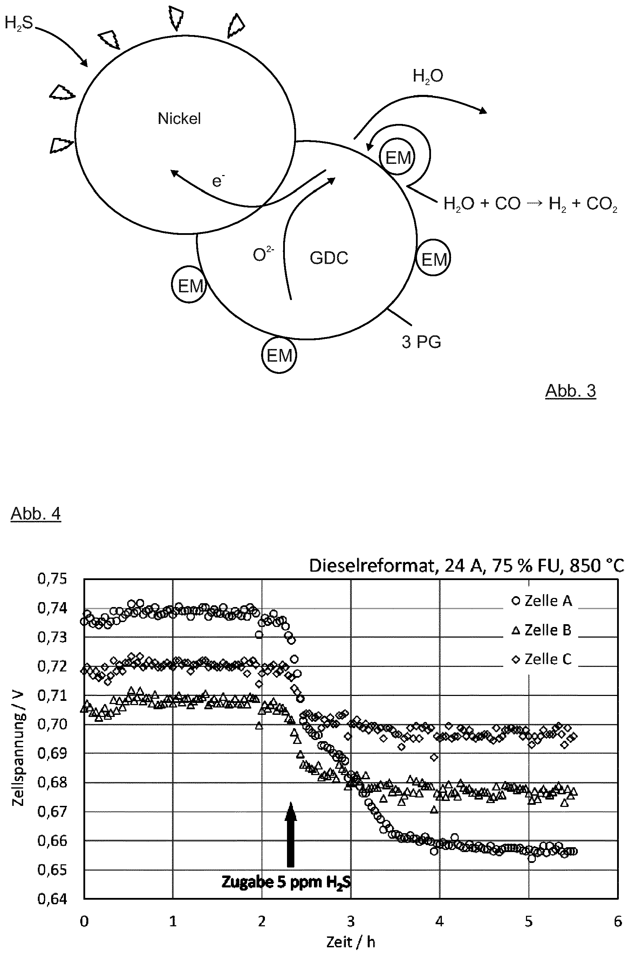

In **Fig.3** ist die Funktionsweise der SOFC unter schwefelhaltigem Reformatgas mit modifizierter Anode dargestellt.

Hier ist die Ni/GDC-Anode mit dem eingebrachten Metall (EM) gezeigt, wobei die Wasser-Gas-Shift-Reaktion durch das eingebrachte Metall (EM) katalysiert wird. Es steht wieder genügend Wasserstoff an der 3-Phasen-Grenze zur Verfügung. Es findet kaum Wasser-Gas-Shift-Reaktion an der Ni-Oberfläche statt, jedoch übernimmt das eingebrachte Metall (EM) die Funktion des metallischen Partners bei der Wasser-Gas-Shift-Reaktion.

In **Fig.4** ist der Vergleich des Spannungsverhaltens von verschiedenen SOFC-Zellen unter schwefelhaltigem Reformatgas dargestellt.

Hier besitzt Zelle A eine vergleichsweise geringe GDC Oberfläche und Zelle B und C eine vergleichsweise hohe GDC Oberfläche. Ferner steht bei Zelle C ein Edelmetall in Kontakt zur Anode, jedoch nicht unmittelbar mit dem GDC, wie in Fig. 3 beschrieben.

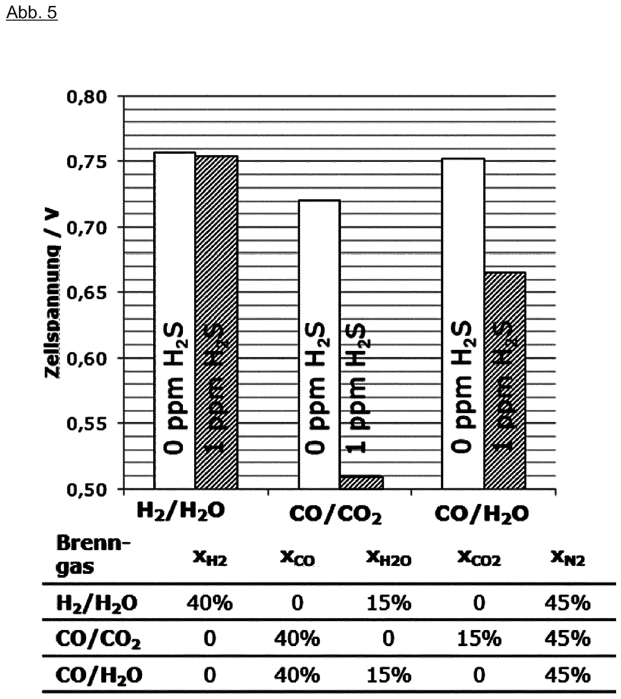

In **Fig.5** ist der Vergleich des Spannungsverhaltens unter schwefelhaltigem Brenngas bei verschiedenen Modellgasen dargestellt.

Zur Analyse des bevorzugten Mechanismus des CO-Umsatzes wurde das Spannungsverhalten der SOFC unter verschiedenen Modellgasen im schwefelfreien und schwefelhaltigen Betrieb untersucht. Wenn der Umsatz von H₂ und CO auf allen möglichen Wegen kinetisch ungehemmt ablaufen würde, so wären alle Zellspannungen identisch. Unter H₂/H₂O ist kein Effekt von Schwefel auf die Zellspannung sichtbar. Die Verwendung von CO/CO₂ führt bereits im schwefelfreien Betrieb zu einer niedrigeren Spannung und unter schwefelhaltigem Betrieb konnte keine stabile Zellspannung gemessen werden. Unter CO/H₂O ist im schwefelfreien Betrieb kein Unterschied zu H₂/H₂O sichtbar, unter schwefelhaltigem Brenngas ergibt sich eine geringere Spannung. Daraus folgt, dass der CO-Umsatz über die Wasser-Gas-Shift-Reaktion kinetisch des CO Direktumsatzes begünstigt abläuft, die Wasser-Gas-Shift-Reaktion jedoch unter schwefelhaltigem Brenngas kinetisch gehemmt abläuft.

## Patentansprüche

1. Schwefeltoleranter Hochtemperaturbrennstoffzellen[*Solid Oxide Fuel Cell - SOFC]-*Wassergas-Shift[WGS]-Katalysator, wobei dessen aktive Anode umfasst:
- Nickel [*Ni*]
und
- Gadolinium dotiertes Ceroxid [*GDC*]
und
- ein Edelmetall, ausgewählt aus der Gruppe:
Rhodium [*Rh*], Ruthenium [*Ru*], Platin [*Pt*], Osmium [*Os*], Iridium [*Ir*] oder Palladium [*Pd*]*.*

2. Schwefeltoleranter Hochtemperaturbrennstoffzellen[*Solid Oxide Fuel Cell - SOFC]-*Wassergas-Shift[WGS]-Katalysator nach Anspruch 1,
**dadurch gekennzeichnet, dass**
die aktive Anodenoberfläche auf und/oder in dessen keramischen Komponente [GDC] das Edelmetall [*Rh, Ru, Pt, Os, Ir, Pd*] in feinst verteilten Ablagerungen aufweist.

3. Schwefeltoleranter Hochtemperaturbrennstoffzellen[*Solid Oxide Fuel Cell - SOFC]-*Wassergas-Shift[WGS]-Katalysator nach Anspruch 1 oder 2,
**dadurch gekennzeichnet, dass**
die Teilchengrößenverteilung der keramischen Komponente [GDC] im Bereich von d(10) = 0,05..0,2 µm, d(50) = 0,15 .. 0,6 µm und d(90) = 0,5 .. 2 µm liegt.

4. Schwefeltoleranter Hochtemperaturbrennstoffzellen[*Solid Oxide Fuel Cell - SOFC]-*Wassergas-Shift[WGS]-Katalysator nach Anspruch 1, 2 oder 3,
**dadurch gekennzeichnet, dass**
die Teilchengröße der Edelmetallpartikel im gefertigten Zustand kleiner als ein Fünftel der Teilchengrößenverteilung der keramischen Komponente betragen.

5. Schwefeltoleranter Hochtemperaturbrennstoffzellen[*Solid Oxide Fuel Cell - SOFC*]-Wassergas-Shift[WGS]-Katalysator-Herstellungsverfahren eines Schwefeltoleranten Hochtemperaturbrennstoffzellen[*Solid Oxide Fuel Cell - SOFC*]-Wassergas-Shift[WGS]-Katalysators nach einem der vorangehenden Ansprüche,
**dadurch gekennzeichnet, dass**
- während des Herstellungsvorganges der aktiven Anode ein Infiltrieren der gesinterten Anode mit einer Metalllösung aus dem Edelmetall [*Rh, Ru, Pt, Os, Ir, Pd*] und anschließender oder späterer Wärmebehandlung
oder
- während des Herstellvorganges der aktiven Anode beim Herstellen der Anodenpaste / des Anodenpulvers ein Beimengen von Metallpartikeln aus dem Edelmetall [*Rh, Ru, Pt, Os, Ir, Pd*] in die Anodenpaste / das Anodenpulver und anschließend ein Sintern der Anode
oder
- während des Herstellvorganges der aktiven Anode beim Herstellen des keramischen Anodenpulvers ein Beimengen einer Metalllösung aus dem Edelmetall [Rh, Ru, Pt, Os, Ir, Pd] und anschließender oder späterer Wärmebehandlung
erfolgt.
